# FASCICULE DE BREVET EUROPEEN

(11) **EP 3 850 269 B1**
(45) Date de publication et mention de la délivrance du brevet: **06.05.2026**
(21) Numéro de dépôt: 19763007.2
(22) Date de dépôt: 10.09.2019
(51) Int. Cl.: F21S 41/153, F21S 41/43, F21S 41/663, F21S 45/47

(54) **MODULE LUMINEUX POUR PROJECTEUR DE VÉHICULE AUTOMOBILE**
LICHTMODUL FÜR KRAFTFAHRZEUGSCHEINWERFER
LIGHT MODULE FOR MOTOR VEHICLE HEADLAMP

(30) Priorité: 12.09.2018 FR 1858178
(43) Date de publication de la demande: 21.07.2021
(73) Titulaire: Valeo Vision, 93012 Bobigny Cedex (FR)
(72) Inventeur: ALBOU, Pierre, 93012 Bobigny Cedex (FR); DANIEL, Thomas, 93012 Bobigny Cedex (FR); CLADE, Sophie, 93012 Bobigny Cedex (FR); ROELS, Sebastien, 93012 Bobigny Cedex (FR)
(74) Mandataire: Valeo Visibility
(86) Numéro de dépôt international: PCT/EP2019/074067
(87) Numéro de publication internationale: WO 2020/053192

(56) Documents cités:
- EP-A1- 3 173 688
- EP-A2- 2 827 049
- AT-U1- 11 129
- DE-U1- 202016 103 287
- US-A1- 2008 158 892
- US-A1- 2014 146 553

## Description

L'invention concerne un module lumineux pour un projecteur de véhicule automobile. L'invention concerne également un projecteur de véhicule automobile et un véhicule automobile comprenant un tel module lumineux.

On connait des projecteurs pour véhicules automobiles permettant d'afficher des informations sur la surface éclairée. Un tel projecteur comprend généralement un dispositif d'émission lumineuse comprenant une source de lumière monolithique multipixels pour afficher une image. Un dispositif optique est monté sur le dispositif d'émission lumineuse, et comprend un système de projection pour guider les faisceaux lumineux issus de chaque pixel de la source de lumière multipixels. Il est toutefois délicat d'obtenir une image de bonne qualité en sortie du dispositif optique, du fait de l'existence de réflexions parasites, qui brouillent l'image finalement projetée. EP 3 173 688 A1 divulgue un module lumineux pour un projecteur de véhicule automobile connu de l'art antérieur.

Le but de l'invention est de fournir un module lumineux à source lumineuse multipixels pour projecteur automobile permettant d'optimiser la qualité du faisceau projeté.

En particulier, l'invention permet de réaliser un module lumineux générant une image projetée plus nette et moins bruitée que les images générées par les dispositifs de l'art antérieur.

A cet effet, l'invention porte sur un module lumineux pour un projecteur de véhicule automobile selon la revendication 1.

Le masque peut recouvrir au moins en partie toutes les connexions électriques et pistes de connexion de la source de lumière, notamment recouvrir toutes les parties de chaque connexion électrique positionnées au-dessus du circuit imprimé et au moins une partie de chaque connexion électrique positionnée au-dessus de la source de lumière.

Les connexions électriques peuvent consister en des liaisons fixées respectivement sur les surfaces d'un circuit imprimé et de la source de lumière orientées du côté de l'optique de projection.

Le masque peut être fixé à un circuit imprimé ou à une embase sur laquelle un circuit imprimé et/ou la source de lumière est fixé, ou dans lequel le masque est fixé à l'optique de projection.

La surface du masque orientée vers l'optique de projection peut présenter une réflectance inférieure à 25%, voire inférieure à 20%, préférentiellement inférieure à 5%.

Le masque peut être réalisé en matériau électriquement conducteur, notamment est en métal ou alliage de métal, préférentiellement aluminium ou en alliage d'aluminium.

Le masque peut être séparé de la source de lumière d'une distance comprise entre 0.2 mm et 5 mm, préférentiellement entre 0.2 mm et 1,5 mm.

Le masque peut être électriquement connecté à une masse.

Le module lumineux peut en outre comprendre une plaque de refroidissement disposée directement ou indirectement contre la source de lumière du côté opposé à l'optique de projection pour refroidir ladite source de lumière, ladite plaque de refroidissement étant optionnellement reliée à un dispositif de refroidissement tel un radiateur thermique.

La plaque de refroidissement peut être agencée de manière à ce que la surface supérieure du circuit imprimé affleure sensiblement à la surface supérieure de la source de lumière.

L'optique de projection peut comprendre au moins un système de projection disposé pour projeter l'image générée par la source de lumière.

L'invention porte aussi sur un dispositif lumineux pour véhicule automobile, tel qu'un projecteur, un feux arrière ou encore un appareil d'éclairage intérieur d'habitacle de véhicule, comprenant un module lumineux tel que décrit précédemment.

Enfin, l'invention porte aussi sur un véhicule automobile comprenant un projecteur tel que défini ci-dessus.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente une vue en coupe d'un module lumineux selon un mode de réalisation de l'invention.
La figure 2 représente un vue en coupe du dispositif d'émission de lumière du module lumineux selon un mode de réalisation de l'invention.
La figure 3A représente une vue du dessus du dispositif d'émission de lumière sans masque du module lumineux selon le mode de réalisation de l'invention.
La figure 3B représente une vue du dessus du dispositif d'émission de lumière avec un masque du module lumineux selon le mode de réalisation de l'invention.
La figure 4 représente une vue en perspective d'une partie du module optique selon le mode de réalisation de l'invention.

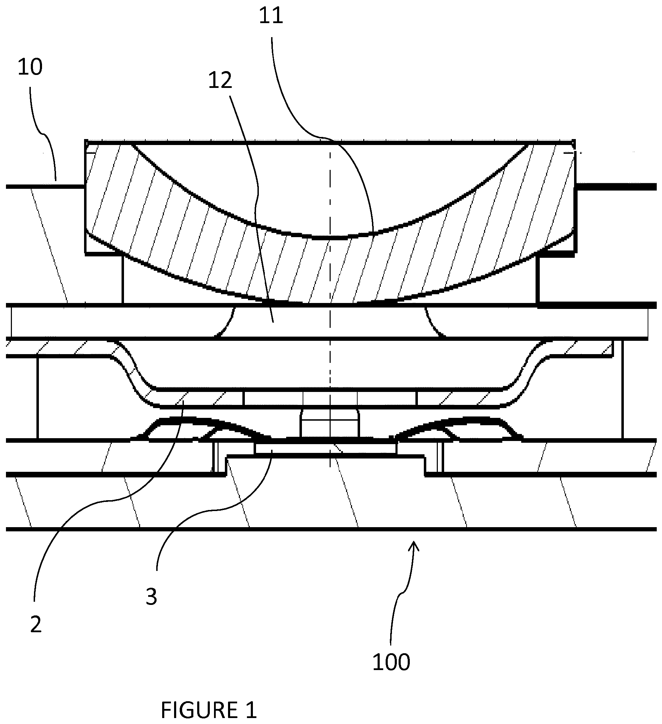

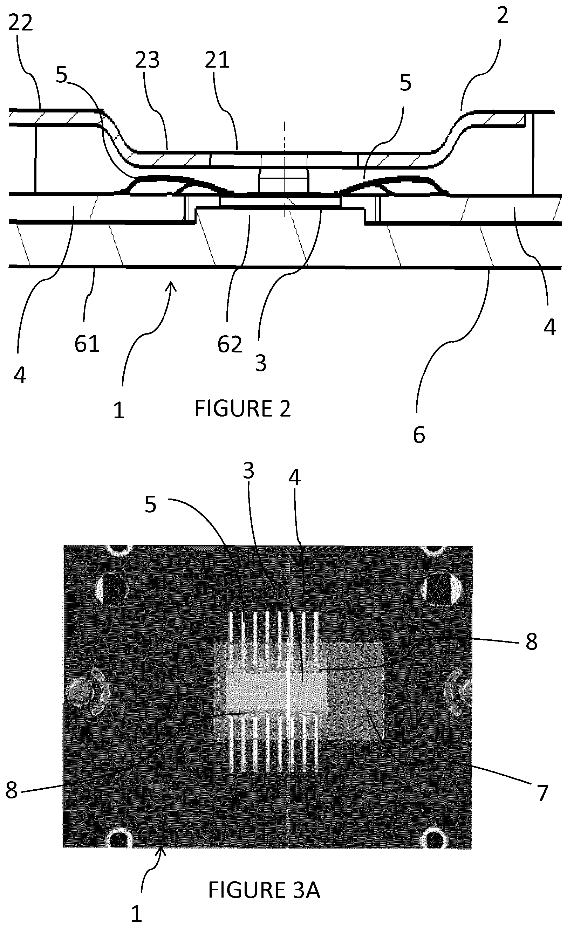

La figure 1 représente schématiquement un module lumineux 100 selon un mode de réalisation de l'invention. Ce module lumineux 100 comprend d'abord un dispositif d'émission lumineuse 1, qui sera plus particulièrement détaillé en référence à la figure 2, qui comprend notamment au moins une source de lumière 3 multipixels ou pixélisée. Plus précisément, le module lumineux comprend une source de lumière pixélisée comprenant une pluralité d'émetteurs électroluminescents répartis en une pluralité de pixels et aptes à émettre des rayons lumineux formant un faisceau lumineux. Le module lumineux 100 comprend de plus un dispositif optique comprenant notamment une optique de projection 10 avec une surface d'entrée 12, pour guider vers l'extérieur les faisceaux générés par le dispositif d'émission lumineuse 1, et un masque 2 intercalé entre le dispositif d'émission lumineuse 1 et le dispositif optique, plus précisément l'optique de projection 10.

Le masque 2 permet avantageusement d'absorber au moins une partie des rayons lumineux parasites, par exemple réfléchis par le dispositif optique puis le dispositif d'émission lumineuse, comme cela sera détaillé par la suite.

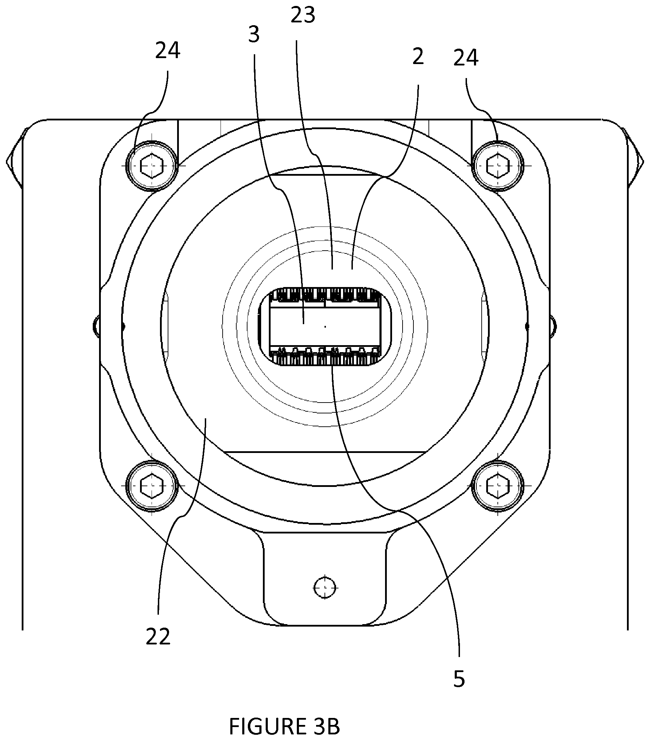

Le dispositif d'émission lumineuse 1 selon le mode de réalisation est décrit ci-après en référence à la figure 2 et les figures 3A et 3B.

Ce dispositif d'émission lumineuse 1 comprend une source de lumière 3 pixélisée, c'est à dire qu'elle comprend une matrice de sources lumineuses élémentaires formant une matrice de pixels. La source de lumière 3 comprend en outre un support 7, qui peut se présenter comme une embase en aluminium, sur lequel est agencée la matrice de sources lumineuses. Elle comprend également des pistes de connexion 8 pour l'alimentation de la matrice de sources lumineuses élémentaires.

La source de lumière 3 est de préférence une source de lumière monolithique. Par monolithique, on entend que chaque pixel émet de la lumière dans une direction. Le faisceau lumineux de chaque pixel est donc rectiligne. Cet effet permet ainsi de s'assurer que la lumière émise par un pixel ne va pas chevaucher la lumière émise par un pixel adjacent.

La source de lumière pixélisée et monolithique peut ainsi projeter une image sur un support situé à une distance suffisamment éloigné du module lumineux. La source de lumière 3 peut également être conçue pour que le faisceau lumineux comprenant l'ensemble des rayons lumineux émis par chaque pixel soit cylindrique.

La source de lumière 3 peut comprendre une matrice de diodes électroluminescentes pour former les pixels, aussi appelée led pixélisée. Préférentiellement, la source de lumière 3 comprend un nombre de pixels compris entre 200 et 10000 pixels, préférentiellement entre 2000 et 6000 pixels. En variante, cette source de lumière pourrait être une matrice de micro-miroirs, qui se présente comme un microsystème électromécanique comprenant une multitude de micro-miroirs qui sont tous mobiles autour d'un même axe et qui peuvent prendre au moins deux orientations distinctes. Selon sa première orientation, un micro-miroir transmet un rayon lumineux hors du module lumineux, dans un champ d'éclairage. Selon sa deuxième orientation, le rayon lumineux est dévié hors du champ d'éclairage. L'orientation de chaque micro-miroir peut être commandée individuellement par l'effet d'une force électrostatique. Une telle matrice de micro-miroirs permet d'obtenir un nombre de pixels très supérieur.

Le dispositif d'émission lumineuse 1 comprend en outre un circuit imprimé 4. Le circuit imprimé 4 est disposé de manière à pouvoir commander la source de lumière 3. Il comprend une ouverture au sein de laquelle est agencée la source de lumière 3.

Dans le mode de réalisation, la source de lumière 3 est connectée au circuit imprimé 4 par des connexions électriques 5 agencées pour connecter électriquement les pistes de connexion 8 de la source de lumière 3 au circuit imprimé 4.

Selon le mode de réalisation, au moins une connexion électrique 5 peut comprendre un fil de soudure. Le fil de soudure peut être de manière non-limitative en aluminium, en or en étain ou tout autre alliage à base d'au moins un métal précité. De par sa composition, une telle connexion électrique 5 est donc réfléchissante. Il existe donc un risque que la connexion électrique 5 réfléchisse des rayons lumineux qui seraient réfléchis par le dispositif optique puis renvoyés vers le dispositif d'émission lumineuse 1. La présence du masque 2 permet d'empêcher au moins une partie, de préférence la totalité, des connexions électriques 5 de recevoir et réfléchir de tels rayons parasites.

Comme illustré par la figure 1, le dispositif d'émission lumineuse est destiné à coopérer avec un dispositif optique. Ce dernier comprend un système optique de projection 11, qui crée une image réelle, et éventuellement anamorphosée, d'une partie du dispositif, par exemple la source elle-même ou un cache, ou d'une image intermédiaire de la source, à distance (finie ou infinie) très grande devant les dimensions du dispositif (d'un rapport de l'ordre d'au moins 30, de préférence 100) du dispositif. Le système de projection peut consister en un ou plusieurs réflecteurs, ou bien en une ou plusieurs lentilles, ou un ou plusieurs guides de lumière ou encore en une combinaison de ces possibilités.

Le dispositif optique comprend une surface d'entrée 12 comportant un revêtement anti-réfléchissant. Malgré un tel revêtement anti-réfléchissant, le dispositif optique réfléchit toujours une faible portion du faisceau lumineux issu de la source de lumière 3 vers le dispositif d'émission lumineuse 1. Ce phénomène génère des rayons lumineux non souhaités et parasites, qui dégradent l'image projetée par le module lumineux s'ils sortent du module lumineux. Plus précisément, le dispositif optique comprend une optique de projection 10 de la lumière émise par la source de lumière à semi-conducteur. Cette optique de projection crée finalement une image réelle, et éventuellement anamorphosée, d'une partie du dispositif, par exemple la source elle-même ou un cache, ou d'une image intermédiaire de la source. Cette image est de très grande dimension vis-à-vis des dimensions du module lumineux et de la source de lumière (selon un rapport de l'ordre d'au moins 30, de préférence au moins 100). Cette optique de projection peut consister en un ou plusieurs réflecteurs, ou bien en une ou plusieurs lentilles, ou un ou plusieurs guides de lumière ou encore en une combinaison de ces possibilités.

Pour réduire ce phénomène de dégradation de l'image projetée par les rayons lumineux réfléchis et parasites, le module lumineux 100 comprend en outre un masque 2 disposé entre le dispositif d'émission de lumière 1 et le dispositif optique. Ce masque 2 est conçu et agencé pour empêcher au moins une partie des rayons réfléchis par le dispositif optique d'être réfléchis une seconde fois par la source de lumière 3, notamment par les connexions électriques 5, les pistes de connexion 8, le support 7, voire le circuit imprimé 4. Le masque 2 empêche ainsi tout ou partie d'émission lumineuse parasite hors du module lumineux 100, qui serait émise par réflexion par des zones disposées en dehors de la au moins une source de lumière 3, et notamment en dehors de la pluralité d'émetteurs électroluminescents.

Selon le mode de réalisation, le masque 2 comprend une ouverture 21 permettant le passage des rayons monolithiques issus de la source lumineuse 3, pour leur permettre d'atteindre le dispositif optique. Cette ouverture 21 comprend de préférence une forme et une dimension très proche de celle de la source lumineuse 3. Elle comprend de préférence un contour de même forme que le contour de la source lumineuse 3, pour ne laisser passer que les rayons lumineux émis par cette source lumineuse 3.

Le masque 2 comprend de plus une surface 22, orientée vers le dispositif optique, anti-réfléchissante et agencée de manière à recouvrir au moins une partie du circuit imprimé 4 et/ou au moins une partie des connexions électriques 5. Comme illustré sur la figure 3B, la surface anti-réfléchissante recouvre une partie importante du circuit imprimé 4 et de la au moins une connexion électrique 5 du dispositif d'émission lumineuse 1. Avantageusement, le masque 2 couvre toutes les connexions électriques 5, incluant toutes leurs parties positionnées au-dessus du circuit imprimé 4 ainsi qu'au moins une de leurs parties positionnées au-dessus de la source de lumière 3. Avantageusement encore, la surface du masque 22 orientée vers le dispositif optique présente une réflectance inférieure à 25%, voire inférieure à 20%, préférentiellement inférieure à 5%.

Au moins une partie des rayons réfléchis par le dispositif optique et dirigés vers le circuit imprimé 4 et/ou la au moins une connexion électrique 5 sont ainsi absorbés et ne vont pas « parasiter » le faisceau lumineux issu du module lumineux 100.

Le masque 2 est agencé au dessus du circuit imprimé 4, de la au moins une connexion électrique 5 et de la source de lumière 3 de manière à ne pas être en contact avec le circuit imprimé 4 et/ou avec la au moins une connexion électrique 5. Il est avantageusement disposé au plus proche de la source de lumière 3. Toutefois, la présence des connexions électriques 5 en relief nécessitent son positionnement légèrement au-dessus de ces connexions électriques 5, et ainsi au-dessus de la source de lumière 3, de préférence à moins de 0,5 mm du plan d'émission de la source de lumière 3, ou selon une distance comprise entre 0.2 mm et 5 mm, préférentiellement entre 0.2 mm et 1,5 mm.

Le masque 2 est de préférence en matériau conducteur thermique afin de dissiper l'échauffement subi dû à la proximité de la source de lumière 3. De plus, le masque 2 est avantageusement en matériaux conducteur électrique et est relié à une masse afin d'éviter la création d'un arc électrique entre le masque 2 et au moins une piste de connexion 5.

Préférentiellement, le masque 2 est ainsi réalisé en métal conducteur tel qu'en aluminium ou en alliage d'aluminium.

Avantageusement, le masque 2 comprend une épaisseur inférieure à 2 mm, inférieure à 1 mm ou inférieure à 0,5 mm. Quand l'épaisseur du masque 2 est inférieure ou égale à 0,5 mm, le refroidissement du masque 2 par échange thermique avec l'air est optimisé.

Selon l'invention, le masque 2 comprend une partie proéminente 23, dans sa zone centrale, dans une direction plus à proximité de la source de lumière 3. Cette partie proéminente 23 forme un relief différent du reste du masque 2. Les parties périphériques du masque servent notamment à sa fixation. De plus, l'échange de chaleur entre l'air et le masque 2 sur la partie non-proéminente est ainsi avantagé. Dans un mode de réalisation, le masque 2 est monté sur le dispositif d'émission lumineuse 1, soit par fixation sur le circuit imprimé 4, soit sur une embase sur laquelle le circuit imprimé est monté. Avantageusement, le masque est fixé sur la même pièce que celle qui supporte la source de lumière 3. Dans un mode de réalisation alternatif, le masque 2 est monté sur le dispositif optique.

Comme illustré par la figure 3B, le masque 2 peut être usiné de manière à comprendre au moins un élément de fixation 24 pour coopérer avec le dispositif d'émission lumineuse 1 et/ou avec le dispositif optique. Cet au moins un élément de fixation 24 peut comprendre un alésage ou un trou fileté.

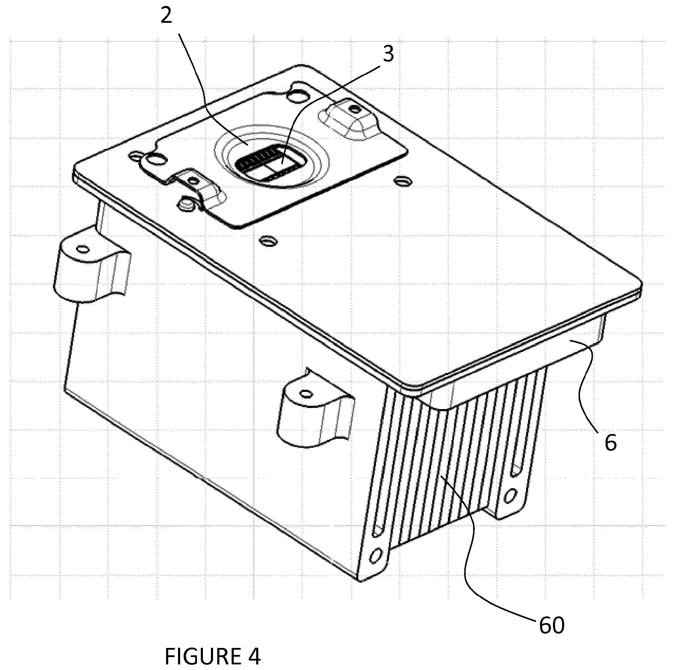

D'autre part, dans le mode de réalisation de l'invention, le dispositif d'émission lumineuse 1 comprend un dispositif de refroidissement. Ce dispositif de refroidissement est conçu pour refroidir le dispositif d'émission de lumière. Il comprend une embase 6 en matériau conducteur thermique. La surface libre 61 de cette embase 6 est en contact avec un radiateur thermique 60, visible sur la figure 4, et/ou avec un échangeur de chaleur de manière à évacuer la chaleur produite par la source de lumière.

Dans un mode de réalisation, l'embase 6 de conducteur thermique comprend une partie centrale comprenant une proéminence 62 sur laquelle est directement fixée la source de lumière 3. Cet agencement facilite l'évacuation de la chaleur générée par source de lumière 3.

La proéminence 62 permet également de rehausser la source de lumière 3. Ainsi, elle est conçue pour que les surfaces de la source de lumière et du circuit imprimé 4 orientées vers le dispositif optique, plus précisément vers l'optique de projection, soient sensiblement à la même hauteur, et en tous cas à une hauteur respective qui optimise leur liaison électrique par les connexions électriques 5. Par sensiblement à la même hauteur, on entend ici que la différence d'élévation entre les deux surfaces soit inférieure à 2 mm, de préférence inférieure à 1 mm.

L'embase 6 de conducteur thermique est agencée de manière à ce que la surface supérieure du circuit imprimé 4 affleure sensiblement à la surface supérieure de la source de lumière 3.

L'invention concerne aussi un projecteur comprenant un module lumineux 100 tel que décrit ci-dessus.

## Revendications

1. Module lumineux (100) pour un projecteur de véhicule automobile comprenant :
- au moins une source de lumière (3) pixélisée comprenant une pluralité d'émetteurs électroluminescents répartis en une pluralité de pixels et aptes à émettre des rayons lumineux ;
- une optique de projection (10) agencée pour imager directement vers l'extérieur du module lumineux (100) un faisceau lumineux formé par lesdits rayons lumineux émis par ladite au moins une source de lumière (3),
- un masque (2) disposé entre la au moins une source de lumière (3) et l'optique de projection (10) pour empêcher en tout ou partie la réflexion de rayons lumineux issus de la source lumineuse par des zones disposées en dehors de la pluralité d'émetteurs électroluminescents de la source de lumière ;
- un circuit imprimé (4), connecté à ladite source de lumière (3) par au moins une connexion électrique (5) fixée à au moins une piste de connexion (8) de la source de lumière (3), ledit masque (2) comprenant une ouverture (21) de manière à laisser passer le faisceau lumineux issu de la source de lumière (3) et à recouvrir au moins partiellement la au moins une connexion électrique (5) et/ou la au moins une piste de connexion (8) et/ou le circuit imprimé (4)
**caractérisé en ce que** le masque (2) comprend une partie proéminente (23), dans sa zone centrale comportant l'ouverture (21), dans une direction plus à proximité de la source de lumière (3) de manière à former un relief différent du reste du masque.

2. Module lumineux (100) selon la revendication précédente dans lequel le masque (2) recouvre au moins en partie toutes les connexions électriques (5) et pistes de connexion (8) de la source de lumière (3), notamment recouvre toutes les parties de chaque connexion électrique (5) positionnées au-dessus du circuit imprimé (4) et au moins une partie de chaque connexion électrique (5) positionnée au-dessus de la source de lumière (3).

3. Module lumineux (100) selon l'une des revendications 1 ou 2, dans lequel les connexions électriques consistent en des liaisons fixées respectivement sur les surfaces d'un circuit imprimé (4) et de la source de lumière (3) orientées du côté de l'optique de projection (10).

4. Module lumineux (100) selon l'une des revendications précédentes, dans lequel le masque (2) est fixé à un circuit imprimé (4) ou à une embase (6) sur laquelle un circuit imprimé et/ou la source de lumière (3) est fixé, ou dans lequel le masque (2) est fixé à l'optique de projection (10).

5. Module lumineux (100) selon l'une des revendications précédentes, dans lequel la surface du masque (2) orientée vers l'optique de projection (10) présente une réflectance inférieure à 25%, voire inférieure à 20%, préférentiellement inférieure à 5%.

6. Module lumineux (100) selon l'une des revendications précédentes, dans lequel le masque (2) est réalisé en matériau électriquement conducteur, notamment est en métal ou alliage de métal, préférentiellement aluminium ou en alliage d'aluminium.

7. Module lumineux (100) selon l'une des revendications précédentes dans lequel le masque (2) est séparé de la source de lumière (3) d'une distance comprise entre 0.2 mm et 5 mm, préférentiellement entre 0.2 mm et 1,5 mm.

8. Module lumineux (100) selon l'une des revendications précédentes dans lequel le masque (2) est électriquement connecté à une masse.

9. Module lumineux (100) selon l'une des revendications précédentes dans lequel le masque (2) comprend des parties périphériques (22) servant à la fixation du masque.

10. Module lumineux (100) selon l'une des revendications précédentes comprenant en outre une plaque de refroidissement (6) disposée directement ou indirectement contre la source de lumière (3) du côté opposé à l'optique de projection (10) pour refroidir ladite source de lumière (3), ladite plaque de refroidissement (6) étant optionnellement reliée à un dispositif de refroidissement tel un radiateur thermique (60).

11. Module lumineux (100) selon la revendication précédente prise en combinaison avec l'une des revendications 1 ou 4 dans lequel la plaque de refroidissement (6) est agencée de manière à ce que la surface supérieure du circuit imprimé (4) affleure sensiblement à la surface supérieure de la source de lumière (3).

12. Module lumineux (100) selon la revendication 11, **caractérisé en ce que** la plaque de refroidissement (6) comprend une partie centrale comprenant une proéminence (62) sur laquelle est directement fixée la source de lumière (3).

13. Module lumineux (100) selon la revendication précédente, **caractérisé en ce que** la proéminence (62) est conçue pour que les surfaces de la source de lumière (3) et du circuit imprimé (4) orientées vers l'optique de projection (10) soient sensiblement à la même hauteur.

14. Module lumineux (100) selon l'une des revendications précédentes, dans lequel l'optique de projection (10) comprend au moins un système de projection (11) disposé pour projeter l'image générée par la source de lumière.

15. Projecteur pour véhicule automobile comprenant un module lumineux (100) selon l'une des revendications précédentes.

## Patentansprüche

1. Lichtmodul (100) für einen Kraftfahrzeugscheinwerfer, umfassend:
- mindestens eine pixelierte Lichtquelle (3), die eine Vielzahl von elektrolumineszierenden Emittern umfasst, die in einer Vielzahl von Pixeln angeordnet sind und in der Lage sind, Lichtstrahlen auszusenden;
- eine Projektionsoptik (10), die angeordnet ist, um einen Lichtstrahl, der durch die von der mindestens einen Lichtquelle (3) ausgesendeten Lichtstrahlen gebildet wird, direkt nach außen des Lichtmoduls (100) abzubilden,
- eine Maske (2), die zwischen der mindestens einen Lichtquelle (3) und der Projektionsoptik (10) angeordnet ist, um die Reflexion von Lichtstrahlen aus der Lichtquelle durch Bereiche, die außerhalb der Vielzahl von elektrolumineszierenden Emittern der Lichtquelle angeordnet sind, ganz oder teilweise zu verhindern;
- eine Leiterplatte (4), die mit der Lichtquelle (3) durch mindestens eine elektrische Verbindung (5) verbunden ist, die an mindestens einer Anschlussbahn (8) der Lichtquelle (3) befestigt ist, wobei die Maske (2) eine Öffnung (21) umfasst, um den Lichtstrahl aus der Lichtquelle (3) durchzulassen und die mindestens eine elektrische Verbindung (5) und/oder die mindestens eine Anschlussbahn (8) und/oder die Leiterplatte (4) mindestens teilweise abzudecken, **dadurch gekennzeichnet, dass** die Maske (2) einen hervorstehenden Teil (23) in ihrem zentralen Bereich mit der Öffnung (21) in einer Richtung näher an der Lichtquelle (3) umfasst, um ein Relief zu bilden, das sich vom Rest der Maske unterscheidet.

2. Lichtmodul (100) nach dem vorhergehenden Anspruch, wobei die Maske (2) mindestens teilweise alle elektrischen Verbindungen (5) und Anschlussbahnen (8) der Lichtquelle (3) abdeckt, insbesondere alle Teile jeder elektrischen Verbindung (5), die über der Leiterplatte (4) positioniert sind, und mindestens einen Teil jeder elektrischen Verbindung (5), die über der Lichtquelle (3) positioniert ist.

3. Lichtmodul (100) nach einem der Ansprüche 1 oder 2, wobei die elektrischen Verbindungen aus Verbindungen bestehen, die jeweils auf den Oberflächen einer Leiterplatte (4) und der Lichtquelle (3) befestigt sind, die zur Projektionsoptik (10) hin ausgerichtet sind.

4. Lichtmodul (100) nach einem der vorhergehenden Ansprüche, wobei die Maske (2) an einer Leiterplatte (4) oder an einer Basis (6) befestigt ist, auf der eine Leiterplatte und/oder die Lichtquelle (3) befestigt ist, oder wobei die Maske (2) an der Projektionsoptik (10) befestigt ist.

5. Lichtmodul (100) nach einem der vorhergehenden Ansprüche, wobei die zur Projektionsoptik (10) hin ausgerichtete Oberfläche der Maske (2) eine Reflektanz von weniger als 25%, sogar weniger als 20%, vorzugsweise weniger als 5% aufweist.

6. Lichtmodul (100) nach einem der vorhergehenden Ansprüche, wobei die Maske (2) aus elektrisch leitendem Material hergestellt ist, insbesondere aus Metall oder Metalllegierung, vorzugsweise Aluminium oder Aluminiumlegierung.

7. Lichtmodul (100) nach einem der vorhergehenden Ansprüche, wobei die Maske (2) von der Lichtquelle (3) in einem Abstand zwischen 0,2 mm und 5 mm, vorzugsweise zwischen 0,2 mm und 1,5 mm, getrennt ist.

8. Lichtmodul (100) nach einem der vorhergehenden Ansprüche, wobei die Maske (2) elektrisch mit einer Masse verbunden ist.

9. Lichtmodul (100) nach einem der vorhergehenden Ansprüche, wobei die Maske (2) Randbereiche (22) umfasst, die zur Befestigung der Maske dienen.

10. Lichtmodul (100) nach einem der vorhergehenden Ansprüche, ferner umfassend eine Kühlplatte (6), die direkt oder indirekt gegen die Lichtquelle (3) auf der der Projektionsoptik (10) gegenüberliegenden Seite angeordnet ist, um die Lichtquelle (3) zu kühlen, wobei die Kühlplatte (6) optional mit einer Kühlvorrichtung wie einem Wärmeabstrahler (60) verbunden ist.

11. Lichtmodul (100) nach dem vorhergehenden Anspruch in Kombination mit einem der Ansprüche 1 oder 4, wobei die Kühlplatte (6) so angeordnet ist, dass die obere Oberfläche der Leiterplatte (4) im Wesentlichen mit der oberen Oberfläche der Lichtquelle (3) bündig ist.

12. Lichtmodul (100) nach Anspruch 11, **dadurch gekennzeichnet, dass** die Kühlplatte (6) einen zentralen Teil umfasst, der einen Vorsprung (62) aufweist, auf dem die Lichtquelle (3) direkt befestigt ist.

13. Lichtmodul (100) nach dem vorhergehenden Anspruch, **dadurch gekennzeichnet, dass** der Vorsprung (62) so konzipiert ist, dass die zur Projektionsoptik (10) hin ausgerichteten Oberflächen der Lichtquelle (3) und der Leiterplatte (4) im Wesentlichen auf der gleichen Höhe liegen.

14. Lichtmodul (100) nach einem der vorhergehenden Ansprüche, wobei die Projektionsoptik (10) mindestens ein Projektionssystem (11) umfasst, das angeordnet ist, um das von der Lichtquelle erzeugte Bild zu projizieren.

15. Scheinwerfer für Kraftfahrzeuge, umfassend ein Lichtmodul (100) nach einem der vorhergehenden Ansprüche.

## Claims

1. A light module (100) for a motor vehicle headlamp, **characterized in that** it comprises:
- at least one pixelated light source (3) comprising a plurality of electroluminescent emitters distributed into a plurality of pixels and capable of emitting light rays;
- a projection optic (10) arranged to directly image, toward the outside of the light module (100), a light beam formed by said light rays emitted by said at least one light source (3), and **characterized in that** it comprises:
- a mask (2) arranged between the at least one light source (3) and the projection optic (10) in order to completely or partially prevent light rays originating from the light source from being reflected by regions arranged outside the plurality of electroluminescent emitters of the light source;
- a printed circuit board (4), connected to said light source (3) by at least one electrical connection (5) attached to at least one connection track (8) of the light source (3), said mask (2) comprising an opening (21) so as to allow the light beam originating from the light source (3) to pass and to at least partially cover the at least one electrical connection (5) and/or the at least one connection track (8) and/or the printed circuit board (4),
**characterized in that** the mask (2) comprises a protruding part (23), in its central area containing the opening (21), in a direction closer to the light source (3) so as to form a relief different from the rest of the mask.

2. The light module (100) as claimed in the preceding claim, wherein the mask (2) at least partially covers all of the electrical connections (5) and connection tracks (8) of the light source (3), in particular covers all parts of each electrical connection (5) that are positioned above the printed circuit board (4) and at least part of each electrical connection (5) that is positioned above the light source (3).

3. The light module (100) as claimed in either of claims 1 or 2, wherein the electrical connections consist of links that are attached, respectively, to the surfaces of a printed circuit board (4) and of the light source (3) that are oriented on the projection optic (10)-side.

4. The light module (100) as claimed in one of the preceding claims, wherein the mask (2) is attached to a printed circuit board (4) or to a base (6) to which a printed circuit board and/or the light source (3) is attached, or wherein the mask (2) is attached to the projection optic (10).

5. The light module (100) as claimed in one of the preceding claims, wherein the surface of the mask (2) that is oriented toward the projection optic (10) has a reflectance of lower than 25%, or lower than 20%, preferably lower than 5%.

6. The light module (100) as claimed in one of the preceding claims, wherein the mask (2) is made of an electrically conductive material, in particular is made of metal or metal alloy, preferably aluminum or aluminum alloy.

7. The light module (100) as claimed in one of the preceding claims, wherein the mask (2) is separated from the light source (3) by a distance of between 0.2 mm and 5 mm, preferably between 0.2 mm and 1.5 mm.

8. The light module (100) as claimed in one of the preceding claims, wherein the mask (2) is electrically connected to a ground.

9. The light module (100) as claimed in one of the preceding claims, wherein the mask (2) comprises peripheral parts (22) used for fixing the mask.

10. The light module (100) as claimed in one of the preceding claims, further comprising a cooling plate (6) arranged directly or indirectly against the light source (3) on the side opposite the projection optic (10) in order to cool said light source (3), said cooling plate (6) being optionally connected to a cooling device such as a thermal radiator (60).

11. The light module (100) as claimed in the preceding claim taken in combination with one of claims 1 or 4, wherein the cooling plate (6) is arranged so that the upper surface of the printed circuit board (4) is substantially flush with the upper surface of the light source (3).

12. The light module (100) as claimed in claim 11, **characterized in that** the cooling plate (6) comprises a central part comprising a protrusion (62) on which the light source (3) is directly fixed.

13. The light module (100) as claimed the preceding claim, **characterized in that** the protrusion (62) is designed so that the surfaces of the light source (3) and the printed circuit board (4) oriented towards the projection optic (10) are substantially at the same height.

14. The light module (100) as claimed in one of the preceding claims, wherein the projection optic (10) comprises at least one projection system (11) arranged so as to project the image generated by the light source.

15. A headlamp for a motor vehicle comprising a light module (100) as claimed in one of the preceding claims.
